# EUROPEAN PATENT APPLICATION

(11) **EP 1 914 988 A2**
(43) Date of publication of application: **23.04.2008**
(21) Application number: 07110114.1
(22) Date of filing: 12.06.2007
(51) Int. Cl.: H04N 7/01, H04N 7/015

(54) **Digital image processing method for analog transmission network, and camera apparatus, image processing apparatus and image processing system therefor**

(30) Priority: 18.10.2006 KR 20060101528
(71) Applicant: Mavics Technologies Co. Ltd., Tokyo 107-8505 (JP)
(72) Inventor: Lim, In Keon, 423-737, Gwangmyeong-si, Gyeonggi-do (KR); Lim, Byeong Jin, 137-807, Seocho-gu, Seoul (KR)
(74) Representative: Joly, Jean-Jacques

(57) **Abstract**

A camera apparatus having a digital image processing function for an analog transmission network is provided. The camera apparatus divides each of frames of first resolution digital image data into N equal regions, converting each frame of the digital image data into N fields by interlacing the regions in order of region numbers, and transmitting the N fields through the analog transmission network. High resolution image data of HDTV class created by the camera apparatus can be reproduced on an image display apparatus by using analog transmission networks laid for transmitting analog image data conforming to the analog NTSC, PAL, or SECAM standard without any change.

## Description

### BACKGROUND

### Field

The present invention relates to an image processing technique applicable to a security surveillance system. More particularly, the present invention relates to a digital image processing method for an analog transmission network, and a camera apparatus, an image processing apparatus and an image processing system therefor, wherein high resolution digital images obtained while operating the security surveillance system can be transmitted through the analog transmission network and can be reproduced to such a degree as the security analysis is not affected even though some portions of data are corrupted in the process of data transmission.

### Description of the Related Art

With advancements in television broadcasting standards from national television systems committee (NTSC), phase alternating line (PAL) and Séquentiel couleur à mémoire (SECAM) to digital high definition television (HDTV), techniques for maintaining compatibility with the digital television broadcasting standards need to be developed for the equipments of a security surveillance system that comply with the analog television broadcasting standards.

In all transitional periods, an existing product of an old standard cannot be directly replaced with a product of a new specification due to many accompanying problems.

Since a lot of equipment of security surveillance systems are specialized only for security surveillance systems and are expensive, it takes much time to replace the above equipment with new standard equipment.

Here, a data storage apparatus called as a digital video recorder (DVR) will be described by way of example.

A security surveillance system uses a method by which the system receives images through closed circuit televisions (CCTV) and records the received images in a video tape recorder (VTR) to watch specific locations.

However, such a system has a problem in that many administrators are needed. Since a recording time of a video tape is limited, video tapes for a VTR need to be replaced periodically. Further, there is inconvenient in that if any problem occurs, one of many stored video tapes should be selected and then sequentially searched using a VTR to confirm the scene when the problem occurs.

However, with the advent of the DVR, recorded data can be maintained and managed quite stably with only a little manpower. Further, it is possible since a security surveillance system does not need additional equipment but a VTR is merely replaced with a DVR.

If such equipment complying with a new standard is developed while the compatibility is maintained, demands on the equipment will be followed without any problems in view of business.

Before a digital television broadcasting standard appears, all equipment for all kinds of security surveillance systems have complied with the aforementioned analog television broadcasting standard. However, since all the systems have been developed according to digital television broadcasting standards and digital television broadcast has been already started, it is still unknown how long users will select a security surveillance system following an analog television broadcasting standard.

At this point of time, as analog television broadcasting standards are advanced into digital television broadcasting standards, equipment used in security surveillance systems should follow the digital television broadcasting standards or techniques for displaying an image of HDTV quality, i.e. a supreme digital television broadcasting standard, should be developed.

A security surveillance system generally comprises a camera apparatus for photographing a scene and a data storage apparatus for receiving images photographed by the camera apparatus through a transmission network and storing the received images. Here, the transmission network includes a transmission circuit or apparatus.

Accordingly, in a case where the camera apparatus utilizes a technique for photographing high resolution images of HDTV quality to create the high resolution images, the transmission circuit or apparatus connecting the camera apparatus with a storage system should be able to process image data exchanged between the camera apparatus and the storage system so that the data storage apparatus can receive the high resolution images photographed by the camera apparatus.

There is a problem in that a transmission circuit or apparatus capable of processing high resolution data of HDTV quality should be additionally installed if the transmission circuit or apparatus can process the image data exchanged between the camera apparatus and the storage system.

Since the transmission circuit or apparatus corresponds to an infrastructure of an image transmission system, however, it is difficult to install an additional transmission circuit or apparatus other than the transmission circuits or apparatuses that are widely laid for the transmission of analog image data.

Accordingly, there is a need for developing a technique for receiving and storing high resolution image data of HDTV quality created by the camera apparatus in the storage system or reproducing the received high resolution image data while still using the transmission circuits or apparatuses installed for the transmission of analog image data according to the analog NTSC, PAL or SECAM standards.

Moreover, a system conforming to such an analog video standard has problems in that NTSC can process only the images with a low screen quality of up to 300,000 pixels, i.e. 720 x 480, and that image flickering occurs due to a method in which signals are transmitted in a line unit at time intervals inherent to the analog video standard in a case where analog video image signals of an interlace method are digitalized and employed for a digital system such as a DVR.

As a prior art regarding a method of transmitting high resolution images through an analog network, there is Korean Patent No. 10-500152 issued to UDP Inc. and entitled "high resolution image signal transmission method and high resolution camera therefore."

Korean Patent No. 10-500152 discloses a method of dividing a high resolution image into N sub-frames and transmitting the sub-frames at certain time intervals.

However, according to a method described in Korean Patent No. 10-500152, since sub-frames are transmitted at certain time intervals, a phenomenon that an unpleasant vertical line is displayed at the center of a screen may occur due to the change of level by external noise. Since a sub-frame affected by the noise may be disappeared completely in a case where more critical noise is applied thereto, it is likely that a portion of a high resolution original image may be completely lost.

Further, it becomes a critical defect in a security surveillance system. That is, the security surveillance system should be able to transmit high resolution digital images, which have been photographed at a scene where security surveillance is required, through an analog transmission network for the security analysis, and an administrator should be able to perform an image analysis operation at any time to arrest an unexpected trespasser or criminal by analyzing the transmitted images.

However, if an unpleasant vertical line appears at the center of a transmitted image or some sub-frames affected by noise are completely lost from the image, it is greatly difficult to arrest an unexpected trespasser or criminal.

### SUMMARY

One aspect of the invention provides a method of processing a digital image data. The method comprises: providing digital image data for displaying an image frame under a digital image displaying standard; and processing the digital image data so as to produce a plurality of fields which are configured to display a plurality of image frames under an analog image displaying standard. The processing comprises: partitioning the digital image data into a plurality of subdata, each representing a portion of the image frame under the digital image displaying standard; and interlacing the plurality of subdata so as to produce the plurality of fields.

Each portion of the image frame may have an identical shape and size. each of the subdata may be configured to comprise a plurality of image lines, wherein interlacing comprises: collecting at least one image line from each of the plurality of the subdata; organizing the collected image lines to generate one of the plurality fields; and repeating collecting and organizing so as to generate other fields. The method may further comprise encrypting one of the plurality of fields. The analog image displaying standard may be one selected from the group consisting of NTSC, PAL, and SECAM standards.

Another aspect of the invention provides an image processing device comprising: a digital image input port configured to receive digital image data configured to display an image frame under a digital image displaying standard; a digital image processor configured to process the digital image data so as to produce a plurality of fields configured to display a plurality of frames under an analog image displaying standard, wherein the digital image processor is configured to partition the digital image data into a plurality of subdata, each representing a portion of the image frame under the digital image displaying standard, wherein the digital image processor is further configured to interlace the plurality of subdata so as to produce a plurality of fields.

The analog image displaying standard may be one selected from the group consisting of NTSC, PAL, and SECAM standards. The digital image processor may comprise: a reader configured to read a piece of data representing one image line from each subdata; and a field generator configured to create one of the plurality of fields using the read piece of data from each subdata. The device may further comprise an encryptor configured to encrypt each of the plurality of fields.

Still another aspect of the invention provides a camera comprising: an image capturing module configured to capture an image and generate digital image data for displaying an image frame under a digital image displaying standard; and the digital image processing device of Claim 6 integrated within the camera, wherein the image capturing module is configured to supply the digital image data to the a digital image input port of the digital image processing device.

Still another aspect of the invention provides a method of processing a digital image data, the method comprising: providing a plurality of interlaced fields, each of which is configured to display an image frame under an analog image displaying standard; and processing the plurality of interlaced fields so as to produce a digital image data configured to display an image frame under a digital image displaying standard, wherein processing comprises deinterlacing the plurality of interlaced fields.

The analog image displaying standard may be one selected from the group consisting of NTSC, PAL, and SECAM standards. Each of the interlaced fields may comprise a plurality of image lines, wherein deinterlacing comprises: selecting one of the plurality of fields; distributing at least one image line from the selected field to generate a plurality of portion of the image frame under the digital image displaying standard; and; repeating selecting and distributing so as to generate a plurality of portion of the image frame under the digital image displaying standard. The method may further comprise configuring the portions so as to generate the image frame to be displayed under the digital image displaying standard. Each of the plurality of interlaced fields comprises an encrypted field, wherein the method further comprises decrypting the encrypted fields.

Still another aspect of the invention provides an image processing device comprising: an image data input port configured to receive a plurality of interlaced fields, each of which is configured to display a frame under an analog image displaying standard; and a image processor configured to process the interlaced fields so as to produce a digital image data configured to display an image frame under a digital image displaying standard, wherein the image processor is further configured to deinterlace the plurality of interlaced fields.

Each of the interlaced fields may be configured to represent at least part of each of a plurality of portions of the image frame. The plurality of portions of the image frame may have an identical shape and size. The image processor may be further configured to: select one of the plurality of fields; distribute at least one image line from the selected field to generate a plurality of portion of the image frame under the digital image displaying standard. The image processor is further configured to generate the image frame to be displayed under the digital image displaying standard using the portions. Each of the plurality of interlaced fields may comprise an encrypted field, wherein the device further comprises a decryptor configured to decrypt the encrypted fields. The analog image displaying standard may be one selected from the group consisting of NTSC, PAL, and SECAM standards.

Accordingly, the invention is conceived to solve the problems. It is an object of the present invention to provide a digital image processing method for an analog transmission network, and a camera apparatus, an image processing apparatus and an image processing system therefor, wherein high resolution digital images obtained while operating the security surveillance system can be transmitted through the analog transmission network, and can be reproduced to such a degree as security analysis is not affected even though a portion of data is corrupted in the process of transmission.

According to an aspect of the present invention for achieving the object, there is provided a camera apparatus for use in a security surveillance system having a digital image processing function for an analog transmission network. The camera apparatus of the present invention comprises a photographing unit for photographing a subject and creating digital image data having a first resolution; a memory for storing the first resolution digital image data by frames; a field conversion unit for dividing one frame of the first resolution digital image data into N regions, assigning serial numbers to the N regions, converting each frame of the digital image data into N fields having a resolution corresponding to a transmission protocol of the analog transmission network by interlacing the N regions in order of region numbers, and performing a data input/output process on the memory; and an encoder for encoding each of the fields created by the field conversion unit into analog image data to be transmitted through the analog transmission network.

The first resolution digital image data may be digital image data having a mega pixel resolution.

The field conversion unit may divide one frame of the first resolution digital image data into N regions, assign serial numbers to the respective regions, and convert each frame of the digital image data into N fields by interlacing the regions in order of region numbers. Here, the interlacing process is performed by reading an arbitrary M^{th} line of every region in order of region numbers, reading every N^{th} line from the M^{th} line of every region in order of region numbers and sequentially creating the N fields, each having a resolution corresponding to the transmission protocol of the analog transmission network, from the read lines.

The camera apparatus of the present invention may further comprise an encryption unit for encrypting data of each field created by the field conversion unit and outputting the encrypted data to the encoder.

The N regions are created by dividing a relevant frame into a plurality of equal regions in a horizontal direction and then dividing each of the divided regions into a plurality of equal regions in a vertical direction, and the region numbers are increased sequentially from the left top corner to the right bottom corner of each frame.

According to another aspect of the present invention, there is provided an image processing apparatus for use in a security surveillance system having a digital image processing function for an analog transmission network. The apparatus of the present invention comprises a signal processing unit for inversely converting N fields received through the analog transmission network into one frame of digital image data having a first resolution; and an image output processing unit for outputting the first resolution digital image data to an image display apparatus by frames, wherein each of the N fields comprises analog image data having a resolution corresponding to a transmission protocol of the analog transmission network, and the analog image data are created by dividing each frame of the first resolution digital image data into N regions, assigning serial numbers to the N regions and converting the frame of the digital image data into the N fields by interlacing the N regions in order of region numbers.

The first resolution digital image data may be digital image data having a mega pixel resolution.

The N regions are created by dividing a relevant frame into a plurality of equal regions in a horizontal direction and then dividing each of the divided regions into a plurality of equal regions in a vertical direction, and the region numbers are increased sequentially from the left top corner to the right bottom corner of each frame.

The signal processing unit may comprise a decoder for decoding analog image data of each field received through the analog transmission network into digital image data and outputting the digital image data; a memory for storing the digital image data outputted from the decoder; and a field inverse conversion unit for performing a data input/output process on the memory to inversely convert the N fields inputted through the analog transmission network into one frame of the first resolution digital image data by deinterlacing the fields, in order of region numbers, into the respective N regions of each frame having the same size and assigned the region numbers. Here, the deinterlacing process is performed by sequentially reading every line of each of the fields decoded by the decoder, filling an arbitrary M^{th} line of every region with the read line of field in order of region numbers, filling every N^{th} line from the M^{th} line of every region in order of region numbers, reading the next field and filling the next lines of every region, and so on.

The signal processing unit may further comprise a decryption unit for decrypting encrypted signals of the fields decoded by the decoder and outputting the decrypted signals to the field inverse conversion unit.

The image output processing unit may perform frequency conversion to output the first resolution digital image data to the image display apparatus.

According to a further aspect of the present invention, there is provided a digital image processing method of a camera apparatus for use in a security surveillance system using an analog transmission network. The method of the present invention comprises the steps of dividing one frame of digital image data having a first resolution into N regions; assigning serial numbers to the N regions; converting each frame of the digital image data into N fields having a resolution corresponding to a transmission protocol of the analog transmission network by interlacing the N regions in order of region numbers; and encoding each of the fields into analog image data and outputting the analog image data through the analog transmission network.

The N regions are created by dividing a relevant frame into a plurality of equal regions in a horizontal direction and then dividing each of the divided regions into a plurality of equal regions in a vertical direction, and the region numbers are increased sequentially from the left top corner to the right bottom corner of each frame.

The field conversion step may comprise the step of converting each frame of the digital image data into N fields by interlacing the N regions in order of region numbers, wherein the interlacing process is performed by reading an arbitrary M^{th} line of every region in order of region numbers, reading every N^{th} line from the M^{th} line of every region in order of region numbers and sequentially creating the N fields, each having a resolution corresponding to the transmission protocol of the analog transmission network, from the read lines.

The field conversion step may comprise the step of outputting, if any one of fields is created even before all of the N fields are created from each frame, the created field for the subsequent encoding process.

The field conversion step may comprise the step of sequentially outputting, after all of the N fields are created from each frame, the created fields for the subsequent encoding process.

The method of the present invention may further comprise the step of encrypting data of each field created in the field conversion step and outputting the encrypted data for the encoding process.

According to a still further aspect of the present invention, there is provided a digital image processing method of an image processing apparatus for use in a security surveillance system using an analog transmission network. The method of the present invention comprises the steps of inversely converting N fields received through the analog transmission network into one frame of digital image data having a first resolution; and outputting the first resolution digital image data to an image display apparatus by frames, wherein each of the N fields comprises analog image data having a resolution corresponding to a transmission protocol of the analog transmission network, and the analog image data are created by dividing each frame of the first resolution digital image data into N regions, assigning serial numbers to the N regions and converting the frame of the digital image data into the N fields by interlacing the N regions in order of region numbers.

The N regions are created by dividing a relevant frame into a plurality of equal regions in a horizontal direction and then dividing each of the divided regions into a plurality of equal regions in a vertical direction, and the region numbers are increased sequentially from the left top corner to the right bottom corner of each frame.

The inverse conversion step may comprise the step of inversely converting the N fields inputted through the analog transmission network into one frame of the first resolution digital image data by deinterlacing the fields, in order of region numbers, into the respective N regions of each frame having the same size and assigned the region numbers, wherein the deinterlacing process is performed by sequentially reading every line of each of the fields decoded by the decoder, filling an arbitrary M^{th} line of every region with the read line of field in order of region numbers, filling every N^{th} line from the M^{th} line of every region in order of region numbers, reading the next field and filling the next lines of every region, and so on.

The inverse conversion step may comprise the step of performing, if any one of fields is received before all of the N fields are received through the analog transmission network, signal processing for deinterlacing every line of the relevant field into the respective regions.

The inverse conversion step may comprise the step of performing, after all of the N fields are received through the analog transmission network, signal processing for deinterlacing every line of each field into the respective regions in order of field numbers.

The method of the present invention may further comprise the step of decoding analog image data of each field received through the analog transmission network into digital image data and outputting the digital image data.

The method of the present invention may further comprise the step of decrypting encrypted data of each field decoded in the decoding step and outputting the decrypted data for the inverse conversion process.

According to a still further aspect of the present invention, there is provided an image processing system for use in a security surveillance system. The image processing system of the present invention comprises a camera apparatus for dividing each of frames of first resolution digital image data created by photographing a subject into N equal regions, assigning serial numbers to the respective regions, converting each frame of the digital image data into N fields by interlacing the regions in order of region numbers, and transmitting the N fields through the analog transmission network, wherein the interlacing process is performed by reading an arbitrary M^{th} line of every region in order of region numbers, reading every N^{th} line from the M^{th} line of every region in order of region numbers and sequentially creating the N fields, each having a resolution corresponding to the transmission protocol of the analog transmission network, from the read lines; and an image processing apparatus for performing signal processing to inversely convert the N fields inputted through the analog transmission network into one frame of the first resolution digital image data by deinterlacing the fields, in order of region numbers, into the respective N regions of each frame having the same size and assigned the region numbers, and outputting the digital image data onto an image display apparatus, wherein the deinterlacing process is performed by sequentially reading every line of each inputted field, filling an arbitrary M^{th} line of every region with the read line of field in order of region numbers, and filling every N^{th} line from the M^{th} line of every region in order of region numbers.

The first resolution digital image data may be digital image data having a mega pixel resolution.

### BRIEF DESCRIPTION OF THE DRAWINGS

The above and other objects, features and advantages of the present invention will become apparent from the following descriptions of embodiments given in conjunction with the accompanying drawings, in which:

Fig. 1 is a block diagram showing the configuration of an image processing system for processing digital images for an analog transmission network according to an embodiment of the present invention;

Fig. 2 is a schematic view illustrating a technique for processing digital image data of mega pixel resolution through an interlaced field conversion process in the image processing system according to an embodiment of the present invention;

Fig. 3 is a view showing an example of a signal complying with an analog television broadcasting standard, which is processed in an analog transmission apparatus that connects a camera apparatus to an image processing apparatus according to an embodiment of the present invention;

Fig. 4 is an exemplary view illustrating the principle of performing the interlaced field conversion process in the image processing system according to an embodiment of the present invention;

Fig. 5 is a block diagram showing the configuration of a camera apparatus for an analog transmission network in the image processing system according to an embodiment of the present invention shown in Fig.1;

Fig. 6 is a flowchart illustrating the operation of the camera apparatus for an analog transmission network according to an embodiment of the present invention shown in Fig.5;

Fig. 7 is a block diagram showing the configuration of the image processing apparatus for an analog transmission network in the image processing system according to an embodiment of the present invention shown in Fig.1;

Fig. 8 is a flowchart illustrating the operation of the image processing apparatus for an analog transmission network according to an embodiment of the present invention shown in Fig.7;

Fig. 9 is a flowchart illustrating the operation of displaying images received from a plurality of mega pixel camera apparatuses on a variety of split screens in the image processing apparatus for an analog transmission network according to an embodiment of the present invention shown in Fig.7; and

Figs. 10 to 14 are views illustrating performance comparison between the technique of the present invention and the technique of a prior art.

### DETAILED DESCRIPTION OF EMBODIMENTS

Hereinafter, an embodiment of the present invention will be described in greater detail with reference to the accompanying drawings.

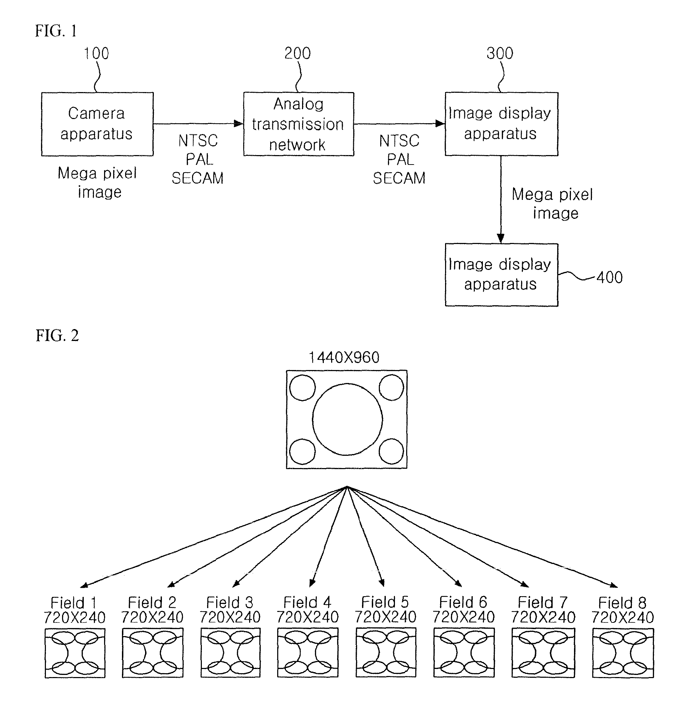

Fig. 1 is a block diagram showing the configuration of an image processing system for processing digital images for an analog transmission network according to an embodiment of the present invention, and Fig. 2 is a view illustrating the principle of processing digital image data of mega pixel resolution through an interlaced field conversion process in the image processing system according to an embodiment of the present invention.

Referring to Fig. 1, the image processing apparatus comprises a camera apparatus 100, an analog transmission network 200 and an image processing apparatus 300.

The camera apparatus 100 is connected to the analog transmission network 200 through an analog transmission circuit, and the analog transmission network 200 is also connected to the image processing apparatus 300 through an analog transmission circuit.

Accordingly, when certain image data are transmitted through the analog transmission circuit, the image data are converted into analog image signals and then transmitted according to the analog NTSC, PAL, or SECAM standards.

In addition, the analog transmission network 200 receives analog image signals from the camera apparatus 100 according to the analog NTSC, PAL, or SECAM standards and transmits the received signals to the image processing apparatus 300.

The camera apparatus 100 photographs a subject and creates digital image data with a resolution of mega pixels (1440 x 960), converts the created mega pixel digital image data into analog image signals (720 x 240) conforming to the analog NTSC, PAL or SECAM standard through the signal processing and transmits the converted analog image signals to the image processing apparatus 300 through the analog transmission network 200 connected through an analog transmission circuit.

The image data (720 x 240) transmitted to the image processing apparatus 300 by the camera apparatus 100 can be reproduced again in the form of digital image data with a resolution of mega pixels (1440 x 960) through the signal processing in the image processing apparatus 300.

Since the digital image data with a resolution of mega pixels (1440 x 960) photographed and created by the camera apparatus 100 do not follow the transmission protocol of the analog transmission network 200 through which analog image signals of the analog NTSC, PAL or SECAM standard are transmitted, the data cannot be transmitted through the analog transmission network 200 in a state where they are created.

Accordingly, the pixel camera apparatus 100 performs the signal processing of digital images with a resolution of mega pixels into images with a resolution conforming to the transmission protocol of the analog transmission network 200.

To this end, as shown in Fig. 2, the camera apparatus 100 performs an interlacing process for a frame of digital images with a resolution of mega pixels (1440 x 960) to create eight fields having a resolution (720 x 240) conforming to the transmission protocol of the analog network 200 and transmits the created eight fields to the image processing apparatus 300 through the analog transmission network 200 in accordance with the transmission method of the analog transmission network 200.

The image processing apparatus 300 receives the eight fields of the NTSC, PAL or SECAM standard transmitted from the camera apparatus 100 through the analog transmission network 200, performs interlaced field inverse signal processing to restore the received data to the digital image data having a mega pixel resolution (1440 x 960) created by the camera apparatus 100, and outputs the restored digital image data to an image display apparatus 400 or stores the data into a memory.

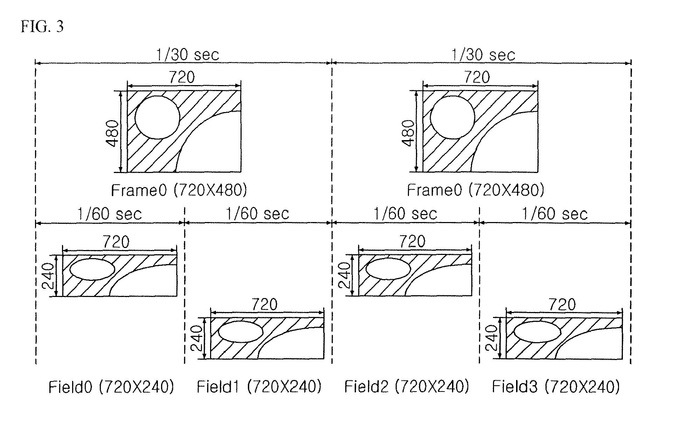

Fig. 3 is a view showing an example of a signal conforming to an analog television broadcasting standard, which is processed in an analog transmission apparatus that connects a camera apparatus to an image processing apparatus according to the present invention.

Referring to Fig. 3, the analog transmission network 200 that connects the camera apparatus 100 and the image processing apparatus 300 can process only the signals conforming to an analog television broadcasting standard.

The maximum resolution of an analog television broadcasting standard is 720 x 480 in case of NTSC and 720 x 576 in case of PAL.

In the analog transmission protocol of NTSC, an image with a resolution of 720 x 480 is divided into even and odd field images each having a resolution of 720 x 240, and the divided field images are transmitted through the analog transmission network 200 on the field basis.

That is, if a certain camera apparatus other than the camera apparatus 100 according to an embodiment of the present invention creates an image frame with a resolution of 720 x 480 through a progressive scanning, the image frame is divided into even and odd field images each having a resolution of 720 x 240, as shown in Fig. 3. Then, each of the field images is processed and outputted through the analog transmission network 200.

On the other hand, the camera apparatus 100 according to an embodiment of the present invention creates an image with a resolution of 1440 x 960 (1.4 mega pixels) by a photographing operation. Accordingly, in order to transmit the image with a resolution of 1440 x 960 through the analog transmission network, a process of converting the photographed image into field images each having a resolution of 720 x 240 is required.

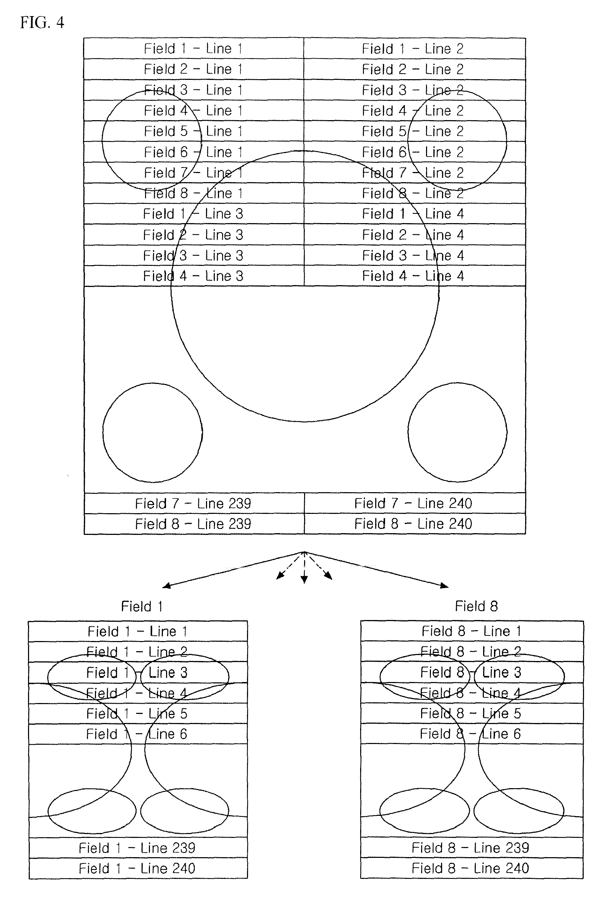

To this end, the camera apparatus 100 does not perform an interlacing process of creating even and odd field images as shown in Fig. 3, but performs an interlacing process of creating eight fields for one screen with a resolution of 1440 x 960 as shown in Fig. 4.

Fig. 4 is an exemplary view illustrating the principle of performing the interlaced field conversion process in the image processing system according to an embodiment of the present invention.

The signal processing of allowing the camera apparatus 100 to perform an interlacing process and create eight fields for one screen with a resolution of 1440 x 960 will be referred to as an interlaced field conversion process.

The camera apparatus 100 divides each frame of digital image data with a resolution of 1440 x 960 created by photographing a subject into eight regions of the same size, assigns serial numbers to the respective regions, converts the frame of the digital image data into eight fields by interlacing the regions in order of region numbers, and transmits the fields through the analog transmission network. The above interlacing process is performed by reading an arbitrary M^{th} line of every region in order of region numbers, reading every eighth line from the M^{th} line of every region in order of region numbers, and sequentially creating the eight fields from the read lines, wherein each of the eight fields has a resolution corresponding to the transmission protocol of the analog transmission network.

At this time, the eight regions of each frame having the same size are created by dividing the relevant frame into halves in a horizontal direction and dividing each of the halves into quarters in a vertical direction.

Then, the eight regions are created by dividing a relevant frame into a plurality of equal regions in a horizontal direction and then dividing each of the divided regions into a plurality of equal regions in a vertical direction, and the region numbers are increased sequentially from the left top corner to the right bottom corner of each frame.

Accordingly, each of the eight fields created by performing the interlaced field conversion process in the camera apparatus 100 has a resolution of 720 x 240. At this time, each field has 240 lines from a first line to a 240^{th} line. Each pair of an odd numbered line and an even numbered line of each field will be a line in a screen with a resolution of 1440 x 960.

As described above, one frame with a resolution of 1440 x 960 is divided into eight regions. The first lines of the first to eighth regions are read and filled in corresponding lines of the first field. Next, the 9^{th} (1 + 8) lines of the first to eighth regions are read and filled in corresponding lines of the first field. Next, the 17^{th} (9 + 8) lines of the first to eighth regions are read and filled in corresponding lines of the first field. In this manner, every eighth lines of the first to eighth regions are read and filled in corresponding lines of the first field.

Accordingly, the first and second lines of the first field correspond to the first lines of the first and second regions on the screen of a frame with a resolution of 1440 x 960.

Further, the 239^{th} and 240^{th} lines of the eighth field correspond to the last lines of the seventh and eighth regions on the screen of a frame with a resolution of 1440 x 960.

Furthermore, the image processing apparatus 300 performs in an inverse way to the process shown in Fig. 2 using the eight field images each having a resolution of 720 x 240 received from the camera apparatus 100 through the analog transmission network 200 and creates an image frame with a resolution of 1440 x 960 shown in Fig. 4.

That is, if a field with a resolution corresponding to the transmission protocol of the analog transmission network is inputted through the analog transmission network, the image processing apparatus 300 performs the signal processing for inversely converting the eight fields inputted through the analog transmission network into a frame of digital image data having a first resolution by deinterlacing the fields, in order of region numbers, into each region of a frame that is divided into eight regions each having the same size and assigned a serial number. The deinterlacing process is performed by sequentially reading respective lines of a relevant field, filling the M^{th} line of every region with the read lines in order of region numbers, and filling every eighth line from the M^{th} line of every region in order of region numbers.

Through the aforementioned process, the image processing apparatus 300 can reproduce mega pixel images each having a resolution of 1440 x 960 through the analog transmission network 200 that uses the NTSC analog transmission protocol for processing images each having the maximum resolution of 720 x 480.

If the camera apparatus 100 interlaces a mega pixel image with a resolution of 1440 x 960 into eight fields each having a resolution of 720 x 240 and uses an NTSC analog transmission network through which image frames each having the maximum resolution of 720 x 480 can be transmitted at a rate of 30 frames per second, the camera apparatus 100 according to the present invention can transmit mega pixel image frames at a rate of 7.5 (= 30/4) frames per second. That is, the frame transmission rate is 7.5 frames per second (fps).

Meanwhile, if the camera apparatus uses a PAL analog transmission network capable of transmitting image frames each having the maximum resolution of 720 x 576 at a rate of 25 fps, the camera apparatus can transmit mega pixel image frames at a rate of 6.25 (= 25/4) fps. That is, the frame transmission rate is 6.25 fps.

These frame transmission rates can be sufficiently employed for performing image analysis in a security surveillance system.

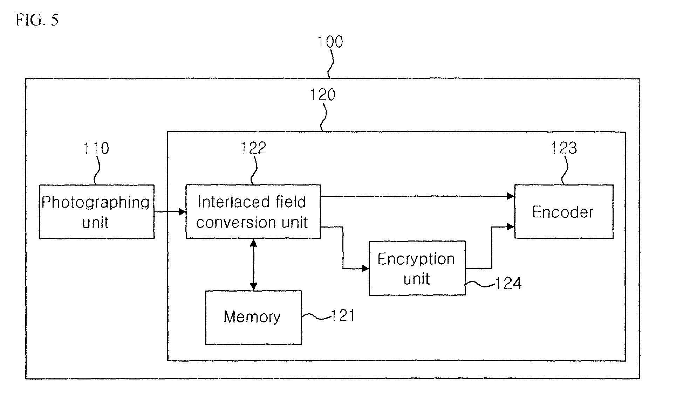

Fig. 5 is a block diagram showing the configuration of a camera apparatus for an analog transmission network in the image processing system according to an embodiment of the present invention shown in Fig.1.

Referring to Fig. 5, the camera apparatus 100 according to an embodiment of the present invention comprises a photographing unit 110 and a signal processing unit 120.

The photographing unit 110 photographs a subject and creates image data with a resolution of mega pixels. For example, the photographing unit 110 can create mega pixel images each having a resolution of 1440 x 960.

To this end, the photographing unit 110 comprises components of a digital camera including a semiconductor image sensor such as a charge coupled device (CCD) or a CMOS image sensor (CIS), a printed circuit board (PCB), camera lenses, at least one or more flashes, and the like to create image data.

The signal processing unit 120 divides each frame of digital image data with a mega pixel resolution created by the photographing unit 110 into eight regions of the same size, assigns a serial number to each region, converts the image frame into eight fields by interlacing the regions in order of region numbers, and transmits the eight fields through the analog transmission network. The interlacing process is performed by reading an arbitrary M^{th} line of every region in order of region numbers, reading the next lines in order of region numbers, and creating the eight fields from the read lines in order, wherein each of the eight fields has a resolution conforming to the transmission protocol of the analog transmission network.

To this end, the signal processing unit 120 comprises a memory 121, an interlaced field conversion unit 122, an encoder 123, and an encryption unit 124.

The memory 121 stores digital image data having a mega pixel resolution created by the photographing unit 110.

A frame of digital image data having a mega pixel resolution inputted from the photographing unit 110 is interlaced into eight field images each having a resolution of 720 x 240 by the interlaced field conversion unit 122, wherein the field images can be transmitted through the analog transmission circuit or network 200. Then, the eight interlaced field images are stored in the memory 121 according to fields.

Further, the memory 121 stores, in a readable format, identification information for identifying the sequence number of each of the eight field images. At this time, the identification information can be inserted into the image data of each field, or the sequence number can be identified by the memory address of the memory 121 where the field image is stored.

If the sequence number is identified by the memory address of the memory 121, a process of inserting additional identification information into the image data read from a relevant memory address and outputting the image data to the encoder 123 by the interlaced field conversion unit 122 is required.

The interlaced field conversion unit 122 performs the data input/output process for the memory 121 to interlace each frame image of digital image data with a mega pixel resolution created by the photographing unit 110 into eight fields each having a resolution of 720 x 240 and transmit the interlaced fields through the analog transmission network.

To this end, the interlaced field conversion unit 122 performs the interlaced field conversion process for each frame of digital image data with a mega pixel resolution photographed by the photographing unit 110 and then records eight field images each having a transmission resolution (720 x 240) into corresponding areas of the memory 121.

Further, in order to transmit the digital image data recorded in the memory 121 through the analog transmission network, the interlaced field conversion unit 122 reads the digital image data in accordance with the transmission protocol of the analog transmission network and then outputs the digital image data to the encoder 123.

Here, the interlaced field conversion unit 122 records, in a readable format, identification information for identifying the sequence number of each of the eight fields into each field image.

Alternatively, the sequence number may be identified by the memory address of the memory 121 in which each relevant field image is stored.

In this case, the interlaced field conversion unit 122 inserts additional identification information into the image data read from the relevant memory address of the memory 121 and then outputs the image data to the encoder 123.

As a technique for inserting identification information into each image before the image is stored in the memory or before the image is outputted to the encoder 123, a position tag is inserted into a blank section where no data are loaded for a synchronizing process which will be performed in a reproduction process of the image processing apparatus 300.

The position tag inserted in a blank section can be in the form of an electric pulse. Accordingly, if a predetermined electric pulse is recognized in a blank section of the received image data, the image processing apparatus 300 can identify the position tag from the recognized electric pulse.

Further, in order to stabilize the signal processing, certain pulses are repeated several times at regular intervals, and thus, the reliability thereof can be increased.

Since field identification information is inserted in a blank section, the images reproduced at the image processing apparatus 300 are not affected at all.

The encryption unit 124 encrypts output data of the interlaced field conversion unit 122 using an n-bit encryption key in order to prevent the transmission line from being eavesdropped from the outside while the data are transmitted in a similar way to analog video signals generally in the security surveillance field.

The operation of the encryption unit 124 can be optionally selected. Accordingly, if the encryption is not needed, the encryption unit can be set to be inactivated or to transfer the output signals of the interlaced field conversion unit 122 to the encoder 123 without additional signal processing.

The encoder 123 encodes digital image data, which are encrypted by means of the encryption unit 124 or read from the memory 121 by the interlaced field conversion unit 122 without an additional signal encryption process, into analog image data that can be transmitted through the analog transmission network.

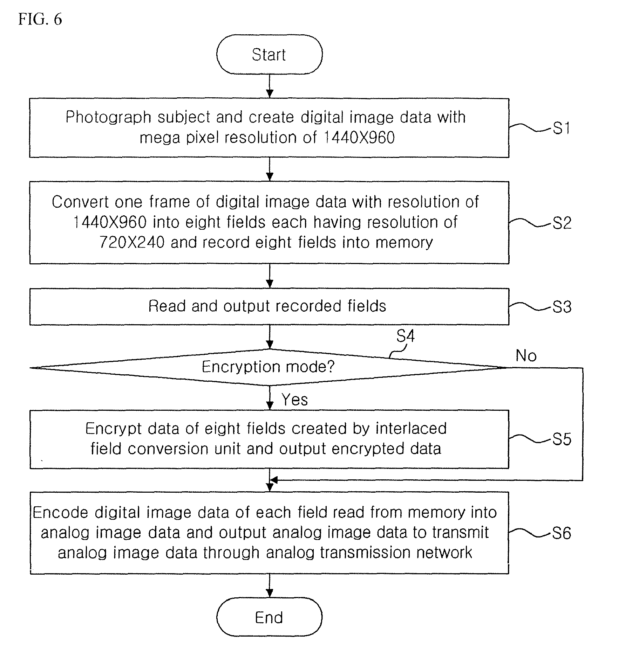

Fig. 6 is a flowchart illustrating the operation of the camera apparatus for an analog transmission network according to an embodiment of the present invention shown in Fig.5.

Referring to Fig. 6, the photographing unit 110 photographs a subject and creates digital image data with a resolution of 1440 x 960 (step S1). Although the CCD sensor of the photographing unit 110 creates an analog image when photographing a subject, the photographing unit 110 includes an additional A/D conversion unit, and thus, it is deemed that the A/D conversion unit converts the analog image into digital data and then outputs the digital data.

If the A/D conversion unit is not additionally included in the photographing unit 110, the interlaced field conversion unit 122 can be provided with an additional A/D conversion unit and converts the analog data created by the photographing unit 110 into the digital data.

In order to receive a frame of digital image data with a resolution of 1440 x 960 created by the photographing unit 110 and to store the received frame into the memory 121 after converting the frame into eight fields each having a resolution of 720 x 240 through the interlacing process, the interlaced field conversion unit 122 records the digital image data one line after another into an area previously allocated for each field (step S2).

At this time, the interlaced field conversion unit 122 reads one frame of digital image data line by line and records the lines in order of field numbers. Accordingly, the lines of a second field are recorded after all the lines of a first field have been recorded. Subsequently, the lines of the next field are recorded. In this manner, the lines of an eighth field are recorded.

While recording all the lines of the first field contained in a frame of image and subsequently the lines of the second field into the memory 121, the interlaced field conversion unit 122 reads the recorded digital image of the first field and outputs the digital image through the analog transmission network 200 (step S3).

The interlaced field conversion unit 122 determines whether an encryption mode has been set (step S4). If it is determined that the encryption mode is set, the interlaced field conversion unit activates the encryption unit 124. Then, the encryption unit 124 encrypts the eight field data created by the interlaced field conversion unit 122 using an n-bit encryption key and outputs the encrypted field data to the encoder 123 (step S5).

The encoder 123 encodes the digital image data of each field, which are encrypted by means of the encryption unit 124 or read from the memory 121 by the interlaced field conversion unit 122 without an additional signal encryption process, into analog image data that can be transmitted through the analog transmission network and then outputs the encoded analog image data to the network interface unit (not shown) connected to the analog transmission circuit (step S6).

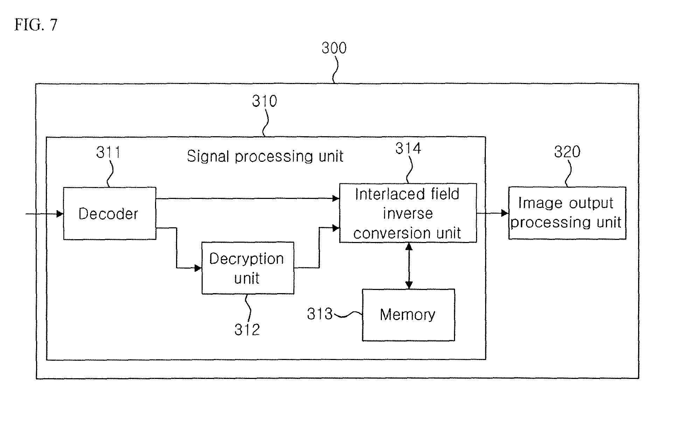

Fig. 7 is a block diagram showing the configuration of the image processing apparatus for an analog transmission network in the image processing system according to an embodiment of the present invention shown in Fig.1.

Referring to Fig. 7, the image processing apparatus 300 according to an embodiment of the present invention comprises a signal processing unit 310 and an image output processing unit 320.

The signal processing unit 310 receives the eight fields each having a resolution of 720 x 240, which conforms to the NTSC, PAL or SECAM standard, from the camera apparatus 100 through the analog transmission apparatus 200, performs the interlaced field inverse conversion signal processing to restore the received data to the digital image data with a resolution of 1440 x 960 created by the camera apparatus 100, and outputs the digital image data.

To this end, the signal processing unit 310 includes a decoder 311, a decryption unit 312, a memory 313 and an interlaced field inverse conversion unit 314.

The decoder 311 receives the eight fields each having a resolution of 720 x 240 through the analog transmission network, decodes the analog image signals contained in each field into digital image signals, and outputs the digital image signals.

If the signals decoded by the decoder 311 are encrypted signals, the decryption unit 312 decrypts the signals.

The decryption unit 312 may be selectively implemented and operated. As shown in the figure, in a state where the decoder 311 is directly connected to the interlaced field inverse conversion unit 314, the decryption unit 312 can be connected in parallel between the decoder 311 and the interlaced field inverse conversion unit 314 and can also be connected to the interlaced field inverse conversion unit 314 via a multiplexer (not shown).

Accordingly, if the output signals from the decoder 311 are not encrypted signals, the decryption unit 312 can be set to be inactivated or the output signals of the decoder 311 are not selected by the decryption unit 312.

The memory 313 receives the signals decrypted by the decryption unit 312 or the eight fields each having a resolution of 720 x 240 outputted from the decoder 311 and stores digital image signals of a relevant field.

The interlaced field inverse conversion unit 314 performs the data input/output process for the memory 313 to perform the interlaced field inverse conversion processing in order of field numbers for each of the eight fields with a resolution of 720 x 240 decoded by the decoder 311 and then to create one frame of image data with a resolution of 1440 x 960.

Here, the interlaced field inverse conversion unit 314 records the lines of digital image data contained in each of the eight fields with a resolution of 720 x 240 decoded by the decoder 311 into the memory 313 in order of field numbers to restore the eight fields to one frame of image with a resolution of 1440 x 960.

That is, respective lines of the first field are read and recorded in a corresponding region of the memory 313. If the recording of the first field has been completed, respective lines of the second field are read and recorded in a corresponding region of the memory 313. Subsequently, respective lines of the next field are recorded. In this manner, if respective lines of the eighth field are finally recorded in a corresponding region of the memory 313, the eight fields are restored to the digital image data with a mega pixel resolution of 1440 x 960 created by the camera apparatus 100.

At this time, as field identification information for identifying the sequence number of each field in a corresponding frame, a position tag is inserted in a blank section where no data are loaded for a synchronizing process which will be performed in a reproduction process of the image processing apparatus 300.

The position tag inserted in a blank section can be in the form of an electric pulse. Accordingly, if a predetermined electric pulse is recognized in a blank section of the received image data, the interlaced field inverse conversion unit 314 can identify the position tag from the recognized electric pulse.

Therefore, the interlaced field inverse conversion unit 314 reads the position tag inserted in the blank section and identifies the sequence number of a corresponding field, i.e. any one of the first to eighth fields.

If a protocol in which image data are transmitted or received in order of first to eighth fields between the camera apparatus 100 and the image processing apparatus 300 is already defined for efficient operation, the sequence number of the corresponding field can be identified by merely recognizing a field of a predetermined sequence.

Accordingly, the interlaced field inverse conversion unit 314 searches the field identification information from an arbitrary field received through the analog transmission network 200. Then, if the field identification information is recognized, the inverse conversion unit 314 processes the corresponding field as the first field. The next field is recognized as the second field, and so on until the eighth field is recognized.

Meanwhile, the digital image data decoded by the decoder 311 may be digital images received either from a single transmission part or from a plurality of different transmission parts.

In this case, when recording respective digital images into the memory 313 according to the field identification information, the interlaced field inverse conversion unit 314 classifies the digital image data decoded by the decoder 311 according to at least one or more transmission parts that have transmitted the corresponding digital image data, and records the classified digital image data into corresponding regions of the memory 313, respectively, to perform the image restoration.

In order to classify the digital image data decoded by the decoder 311 according to at least one or more transmission parts that have transmitted the corresponding digital image data and store the classified digital image data into the corresponding regions of the memory 313, respectively, the interlaced field inverse conversion unit 314 reads channel identification information for identifying the transmission part, which has transmitted each digital image, from the digital image data decoded by the decoder 311, classifies each digital image according to the channel identification information, and records the classified digital image into the memory 313.

Further, if the digital image data decoded by the decoder 311 are classified according to at least one or more transmission parts which have transmitted the corresponding digital image data and stored into the corresponding regions of the memory 313, the interlaced field inverse conversion unit 314 reads digital images from the memory 313 according to the channel identification information for identifying a transmission part and outputs the read digital images to the image output processing unit 320.

The image output processing unit 320 outputs the digital image data with a mega pixel resolution created through the signal processing by the signal processing unit 310.

The image output processing unit 320 can perform frequency conversion to output digital image data with a mega pixel resolution created through the signal processing by the signal processing unit 310 to the image display apparatus 400 such as a video graphics array (VGA) monitor.

In addition, when each digital image is classified according to one or more transmission parts and stored in the corresponding regions of the memory 313 by the interlaced field inverse conversion unit 314, the image output processing unit 320 performs the signal processing for outputting respective digital images in reduced forms to display the respective digital images at the same time on a single screen in the form of a variety of split screens.

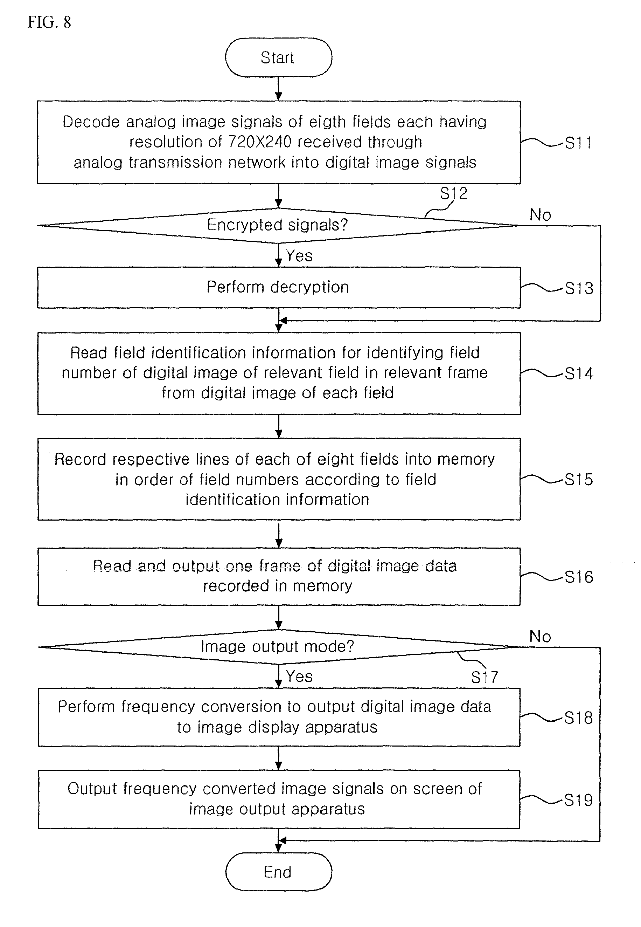

Fig. 8 is a flowchart illustrating the operation of the image processing apparatus for an analog transmission network according to an embodiment of the present invention shown in Fig.7.

Referring to Fig. 8, the decoder 311 of the image processing apparatus 300 receives eight fields each having a resolution of 720 x 240 inputted through the analog transmission network and decodes analog image signals contained in each field into digital image signals (step S11).

The decryption unit 312 determines whether the signals decoded by the decoder 311 are encrypted signals (step S12). If it is determined that the signals are encrypted ones, the decryption unit decrypts the signals and outputs the decrypted signals to the interlaced field inverse conversion unit 314 (step S13).

At this time, digital images contained in each field outputted by the decoder 311 have identification information for identifying the sequence number of each field in a corresponding frame. As the identification information, a position tag is inserted in a blank section where no data are loaded for a synchronizing process which will be performed in the reproduction process of the image processing apparatus 300.

The position tag inserted in a blank section can be in the form of an electric pulse. Accordingly, if a predetermined electric pulse is recognized in the blank section of a received field, the interlaced field inverse conversion unit 314 can identify the position tag from the recognized electric pulse (step S 14).

Therefore, the interlaced field inverse conversion unit 314 reads the position tag inserted in the blank section and identifies the sequence number of a corresponding field, i.e. any one of the first to eighth fields.

In order to restore eight fields to one frame of image with a resolution of 1440 x 960, the interlaced field inverse conversion unit 314 performs the interlaced field inverse conversion processing for each of the eight fields with a resolution of 720 x 240 decoded by the decoder 311 in order of field numbers and records the lines of each field into the memory 313 in order of field numbers (step S 15).

That is, respective lines of the first field are read and recorded in a corresponding region of the memory 313. If the recording of the first field has been completed, respective lines of the second field are read and recorded in a corresponding region of the memory 313. Subsequently, respective lines of the next field are recorded, and so on until the last line of the eighth field is read and recorded in a corresponding region of the memory 313. Finally, the digital image data with a resolution of 1440 x 960 created by the camera apparatus 100 can be obtained.

If the respective lines of the eight fields decoded by the decoder 311 are recorded in order of field numbers and thus the recording of one frame with a resolution of 1440 x 960 created by the camera apparatus 100 has been completed by the interlaced field inverse conversion unit 314, a corresponding memory region is read and outputted (step S16).

At this time, the process of recording the fields of the next frame inputted from the decoder 311 into a region of the memory corresponding to the relevant frame can be continuously performed.

If the eight fields are restored to digital image data with a resolution of 1440 x 960 by the signal processing of the interlaced field inverse conversion unit 314, the image output processing unit 320 performs an image output operation in accordance with a predetermined image processing mode.

The image output processing unit 320 determines whether the image processing mode is set to an image output mode (step S17). If the image processing mode is set to an image output mode, the image output processing unit 320 performs frequency conversion to output the digital image data with a mega pixel resolution created through the signal processing by the interlaced field inverse conversion unit 314 to the image display apparatus 400 such as a VGA monitor with a resolution of 1440 x 960 or higher (step S 18).

If the frequency conversion for outputting digital image data to the image display apparatus 400 has been completed, the image output processing unit 320 outputs the frequency-converted image signals on a screen through the image display apparatus 400 such as a VGA monitor (step S 19).

On the other hand, if the image processing mode is not set to an image output mode, the image output processing unit 320 does not perform the image output operation. A case where the image processing mode is not set to an image output mode may correspond to a case where the image display apparatus 400 is not connected to the image processing apparatus 300.

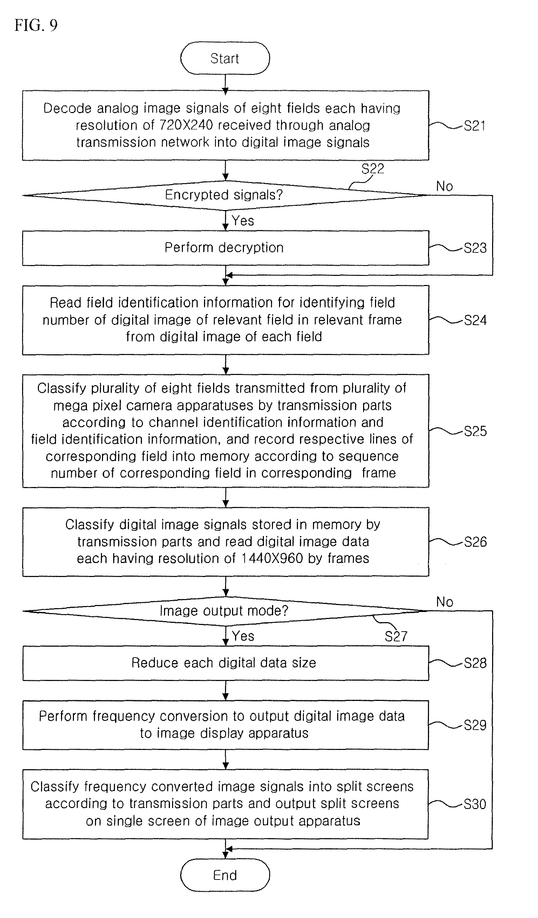

Fig. 9 is a flowchart illustrating the operation of processing images received from several transmission parts in the image processing apparatus for an analog transmission network according to an embodiment of the present invention shown in Fig.7.

Referring to Fig. 9, the decoder 311 of the image processing apparatus 300 decodes analog image signals, which are contained in a plurality of fields each having a resolution of 1440 x 960 inputted through the analog transmission network, into digital image signals (step S21).

The decryption unit 312 determines whether the signals decoded by the decoder 311 are encrypted ones (step S22). If the signals are encrypted ones, the decryption unit decrypts the decoded signals and outputs the decrypted signals to the interlaced field inverse conversion unit 314 (step S23).

At this time, digital images contained in each field outputted from the decoder 311 store a channel identification information for identifying a transmission part that has transmitted the corresponding digital images and a field identification information for identifying the sequence number of the field in a corresponding frame to restore the images of eight fields created by the interlaced field conversion processing to one frame of image for each transmission part.

Accordingly, when each digital image is inputted from the decoder 311, the interlaced field inverse conversion unit 314 reads from each field the channel and field identification information for identifying the sequence number of a corresponding field in a frame to classify the digital image according to the transmission parts and restore the classified eight fields to one frame of image (step S24).

The interlaced field inverse conversion unit 314 classifies the eight fields by the respective transmission parts according to the channel and field identification information read from each input field and records the eight fields, which will be synthesized into one frame of image, i.e. respective lines of a corresponding field, into a predetermined region of the memory 313 according to the sequence number of the field in the corresponding frame (step S25).

If the digital images contained in each field decoded by the decoder 311 are classified according to the channel and field identification information and then recorded into one frame, the interlaced field inverse conversion unit 314 reads the frames one after another by the respective transmission parts and outputs the digital image signals stored in the memory 313 by the respective frames in the form of digital image data with a resolution of 1440 x 960 (step S26).

Accordingly, the interlaced field inverse conversion unit 314 reads and outputs the data recorded by the respective frames each of which is created by performing the interlaced field inverse conversion for the eight transmission fields decoded by the decoder 311 according to the transmission parts.

After digital image data with a mega pixel resolution has been obtained through the signal processing by the interlaced field inverse conversion unit 314, an image output operation can be performed in accordance with to a predetermined image processing mode.

The image output processing unit 320 determines whether the image processing mode is set to an image output mode (step S27). If the image processing mode is set to an image output mode, the image output processing unit 320 performs the signal processing for outputting respective digital images in reduced forms to display digital image data each having a resolution of 1440 x 960, which are classified and created according to the transmission part through the signal processing by the interlaced field inverse conversion unit 314, at the same time on a single screen in the form of a plurality of split screens (step S28).

If the signal processing for outputting digital images in reduced forms is performed, the image output processing unit 320 performs the frequency conversion to output the images, which will be displayed on a single screen in a split form, to the image display apparatus 400 (step S29).

If the frequency conversion for outputting the images to the image display apparatus 400 is performed, the image output processing unit 320 classifies the frequency-converted image signals into split screens according to the transmission parts and outputs the split screens as a single screen of the image display apparatus 400 (step S30).

On the other hand, if the image processing mode is not set to an image output mode, the image output processing unit 320 does not perform an image output operation. A case where the image processing mode is not set to an image output mode may correspond to a case where the image display apparatus 400 for outputting images is not connected to the image processing apparatus 300.

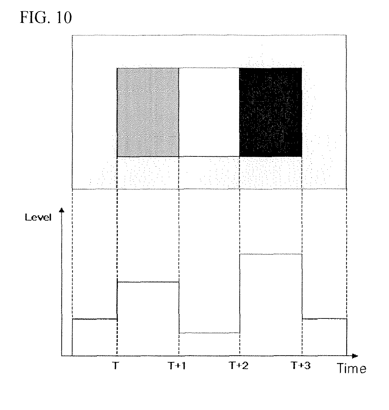

Figs. 10 to 14 are views illustrating the performance comparison between the technique of the present invention and the technique of a prior patent (Korean Patent No. 10-500152).

Fig. 10 shows an analog video signal.

Referring to Fig. 10, the levels of the continuous horizontal signal are changed at the time of T, T+1, T+2 and T+3, and thus, a screen as shown in the figure is displayed.

At this time, this screen will be compared with a screen when noise is produced between T and T+3. Here, the condition of simulation is that the video levels have been changed at the respective points of time.

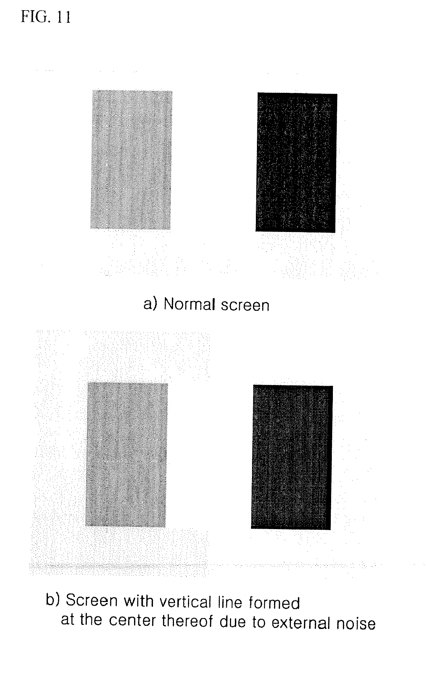

In Fig. 11 (a), since the screen according to the technique of the present invention is constructed by continuous data, the distortion thereof is shown quite indistinctly.

Accordingly, if a method of transmitting frames each having a high resolution of 1440 x 960 according to the present invention by carrying the frames in the respective fields in accordance with the analog signal standard without dividing the frames into arbitrary regions is employed, the frames do not lose but maintain continuity in time between the frames. Therefore, the probability that an unpleasant vertical line will be displayed at the center of the screen as shown in Fig. 11 (b) is nearly zero.

On the other hand, if divided signals of an image according to a method proposed by the prior art are transmitted in completely different time periods and external noise is produced in a time period among the different time periods, it can be shown that a very unpleasant vertical line is displayed at the center of the screen due to the level difference as shown in Fig. 11 (b).

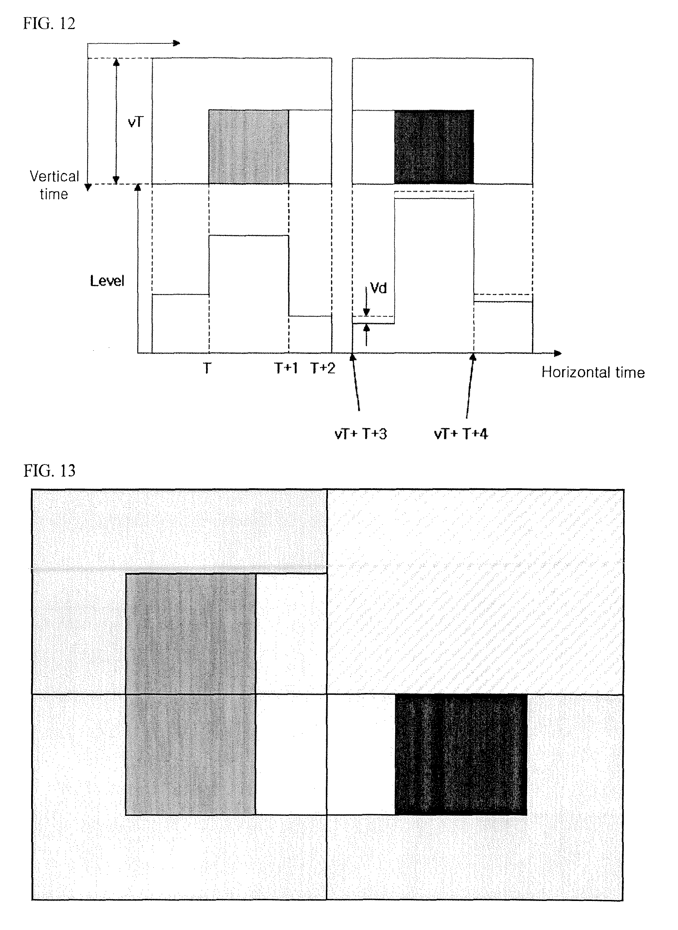

The vertical line shown at the center of the screen is a phenomenon occurring due to an electric potential difference of the analog video signal, i.e. a difference Vd, generated by the external noise as shown in Fig. 12.

If a line is continuously transmitted without a time difference as the analog video standard does, the probability of producing the time difference Vd is very low. For example, an analog image signal is converted to a digital image signal with the 27MHz of sampling frequency and the 8 bit of quantization. Then a single pixel is represented by two digital image data transmitted at the time interval of 37ns(1sec/27 MHz). Thus, if it is assumed that a pixel at T+2 and a pixel at T+3 are continuous data, the time interval between T+2 and T+3 is about 74ns.

To transmit the digital image data as mega pixel image having a resolution higher than an analog video standard by using the analog video standard, it is needed that the mega pixel image should be divided into sub-frames. If the mega pixel image is divided into N sub-frames and transmitted by the prior method, a time interval between T+2 and T+3 is about 33ms(vT+T+3). Thus the image at T+2 and the image at T+3 are not continuous.

Therefore, it is assumed that the probability of being affected by the external noise is 74 when a line is continuously transmitted. If a high resolution frame is divided into N sub-frames and then transmitted in a method proposed by the prior art, the probability of being affected by the external noise becomes up to 33,000,000. That is, the probability of being affected by the external noise will be increased to 445,946 times.

On the other hand, if a method of carrying a high resolution frame in fields in accordance with the analog signal standard as proposed in the present invention is employed, the probability of being affected by the external noise will become up to 12,210.

In the present invention, therefore, the probability of being affected by the external noise is increased to 165, but it corresponds to approximately 2,703 times lower than that of the prior art.

An analog signal is a continuous signal in which a difference between maximum and the minimum electric potentials is merely 1 V. The electric potential difference of 1 V of the analog signal is converted into 8-bit digital signals according to the voltage level. That is, the electric potential difference of 1 V is divided by 1/256 V such that respective colors are assigned to the respective levels. However, in the case of a line that should be continuous and maintain the same level, people's eyes respond even to a very minute electric potential difference of 1/256 V. Therefore, the fact that a vertical line is produced at the center of the screen due to external noise should be seriously considered.

If noise is continuously produced during the time period of vT+T+3 to vT+T+4 as shown in Fig. 12, approximately 1/4 of the frame will be lost as shown in Fig. 13.

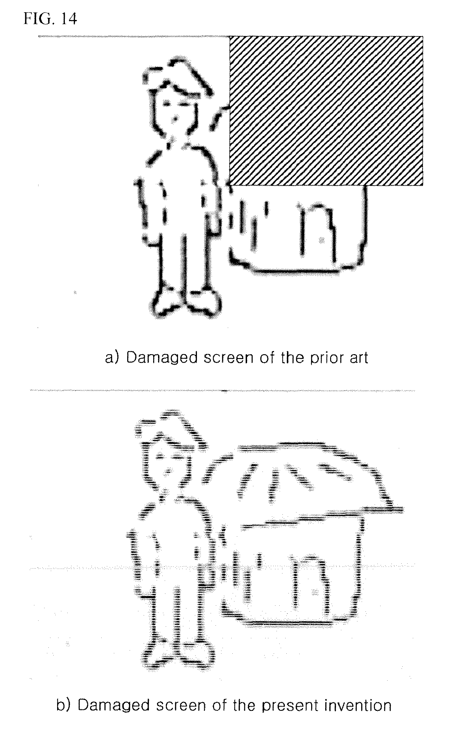

Further, a case where external noise is produced for a certain period of time as shown in Fig. 12 is considered. When a method of dividing a high resolution frame into N sub-frames and transmitting the divided sub frames according to the technique of the prior art is employed, the relevant split screen is damaged and thus a large portion of the whole high resolution frame will be lost. However, when a method of carrying a high resolution frame in fields in accordance with the analog signal standard without dividing the frame into certain regions according to the present invention is employed, only one line of eight lines is damaged because even though one of the eight fields is damaged, the other seven fields contain all the data of the whole regions of the high resolution frame. As a result, when the seven fields are restored to the high resolution frame, the whole regions of the high resolution frame can be recognized with people's eyes. Fig. 14 shows damaged images according to the techniques of the present invention and the prior art.

Although the present invention has been described and illustrated in connection with the embodiment, it will be readily understood by those skilled in the art that various modifications and changes can be made thereto without departing from the spirit and scope of the present invention defined by the appended claims.

For example, it has been described in an embodiment of the present invention that the camera apparatus 100 transmits mega pixel images each having a resolution of 1440 x 960 through an NTSC analog transmission network through which image frames each having a resolution of up to 720 x 480 at a rate of 30 fps.

However, the resolution of 1440 x 960 is a value merely set according to an embodiment of the present invention, and thus, a variety of modifications can be made. The present invention can be modified and applied to a variety of analog transmission networks including the NTSC analog transmission network.

Further, although it has been described in an embodiment of the present invention that only one memory is used in the camera apparatus and the image processing apparatus, two or more memories may be employed.

For example, in a case where two memories are employed, data can be written in a first memory while data can be read and output from a second memory. Alternatively, in a case where a mode is changed, data can be read and output from the first memory while data can be written in the second memory.

In addition, it has been described in an embodiment of the present invention that the camera apparatus and the image processing apparatus are provided with the encryption unit and the decryption unit, respectively. However, if an additional encryption process is not required, any modifications in which the camera apparatus and the image processing apparatus do not include the encryption unit and the decryption unit, respectively, can be readily made.

Further, in an embodiment of the present invention, it has been described that the encryption unit is connected in parallel between the interlaced field conversion unit and the encoder and the decryption unit is connected in parallel between the decoder and the interlaced field inverse conversion unit, when the camera apparatus and the image processing apparatus are provided with the encryption unit and the decryption unit, respectively.

However, a modification can be made in which the interlaced field conversion unit and the encoder are connected with each other through the encryption unit. In such a case, if encryption is needed, the encryption unit is activated to perform the encryption process. However, if the encryption is not needed, the output of the interlaced field conversion unit can be transferred directly to the encoder without additional signal processing.

Similarly, another modification can be made in which the decoder and the interlaced field inverse conversion unit may be connected with each other through the decryption unit. In such a case, if an encrypted signal should be decrypted, the decryption unit is activated to perform the decryption process. However, if a decryption process is not needed, the output signal of the decoder can be transferred directly to the interlaced field inverse conversion unit without additional signal processing.

Furthermore, in an embodiment of the present invention, it has been explained that when an image processing mode is set to an output mode, the image output processing unit provided in the image processing apparatus outputs the image signal signal-processed by the signal processing unit to the image display apparatus.

However, a further modification can be made in which if a certain data storage apparatus is connected to the image processing apparatus, the image output processing unit compresses the image signal signal-processed by the signal processing unit and outputs the compressed signal to store the signal in the relevant data storage apparatus.

According to an embodiment of the present invention, high resolution image data of HDTV class created by the camera apparatus can be stored in a storage system or can be reproduced even by using analog transmission networks laid for transmitting analog image data conforming to the analog NTSC, PAL or SECAM standard without any change.

Further, if a method of carrying frames each having a high resolution of 1440 x 960 in suitable fields in accordance with the analog signal standard without dividing the frames into arbitrary regions is employed, the frames do not lose but maintain continuity in time between the frames. Therefore, since an unpleasant vertical line is not displayed at the center of the screen, a clear image can be provided as important evidence during the image analysis for security surveillance.

Furthermore, according to an embodiment of the present invention, a high resolution frame is not divided into arbitrary regions but carried in suitable fields in accordance with the analog signal standard. Therefore, even though one of eight fields is damaged due to external noise occurring for a certain period of time, only one line among eight lines is damaged because the other seven fields contain all the data of the whole regions of the high resolution frame. As a result, when the seven fields are restored to the high resolution frame, the whole regions of the high resolution frame can be recognized with people's eyes. Therefore, even though some portions of data are corrupted due to severe noise in the process of data transmission, high resolution digital images can be reproduced to such a degree as the security analysis is not affected.

## Claims

1. A method of processing a digital image data, the method comprising:
providing digital image data for displaying an image frame under a digital image displaying standard; and
processing the digital image data so as to produce a plurality of fields which are configured to display a plurality of image frames under an analog image displaying standard, wherein the processing comprises:
partitioning the digital image data into a plurality of subdata, each representing a portion of the image frame under the digital image displaying standard, and
interlacing the plurality of subdata so as to produce the plurality of fields.

2. The method of Claim 1, wherein each portion of the image frame has an identical shape and size.

3. The method of Claim 1, wherein each of the subdata comprises a plurality of image lines, wherein interlacing comprises:
collecting at least one image line from each of the plurality of the subdata;
organizing the collected image lines to generate one of the plurality fields; and
repeating collecting and organizing so as to generate other fields.

4. The method of Claim 1, further comprising encrypting one of the plurality of fields.

5. The method of Claim 1, wherein the analog image displaying standard is one selected from the group consisting of NTSC, PAL, and SECAM standards.

6. An image processing device comprising:
a digital image input port configured to receive digital image data configured to display an image frame under a digital image displaying standard;
a digital image processor configured to process the digital image data so as to produce a plurality of fields configured to display a plurality of frames under an analog image displaying standard, wherein the digital image processor is configured to partition the digital image data into a plurality of subdata, each representing a portion of the image frame under the digital image displaying standard, wherein the digital image processor is further configured to interlace the plurality of subdata so as to produce a plurality of fields.

7. The device of Claim 6, wherein the analog image displaying standard is one selected from the group consisting of NTSC, PAL, and SECAM standards.

8. The device of Claim 6, wherein the digital image processor comprises:
a reader configured to read a piece of data representing one image line from each subdata; and
a field generator configured to create one of the plurality of fields using the read piece of data from each subdata.

9. The device of Claim 6, further comprising an encryptor configured to encrypt each of the plurality of fields.

10. A camera comprising:
an image capturing module configured to capture an image and generate digital image data for displaying an image frame under a digital image displaying standard; and
the digital image processing device of Claim 6 integrated within the camera, wherein the image capturing module is configured to supply the digital image data to the a digital image input port of the digital image processing device.

11. A method of processing a digital image data, the method comprising:
providing a plurality of interlaced fields, each of which is configured to display an image frame under an analog image displaying standard; and
processing the plurality of interlaced fields so as to produce a digital image data configured to display an image frame under a digital image displaying standard, wherein processing comprises deinterlacing the plurality of interlaced fields.

12. The method of Claim 11, wherein the analog image displaying standard is one selected from the group consisting of NTSC, PAL, and SECAM standards.

13. The method of Claim 11, wherein each of the interlaced fields comprises a plurality of image lines, wherein deinterlacing comprises:
selecting one of the plurality of fields;
distributing at least one image line from the selected field to generate a plurality of portion of the image frame under the digital image displaying standard; and;
repeating selecting and distributing so as to generate a plurality of portion of the image frame under the digital image displaying standard.

14. The method of Claim 13, further comprising configuring the portions so as to generate the image frame to be displayed under the digital image displaying standard.

15. The method of Claim 11, wherein each of the plurality of interlaced fields comprises an encrypted field, wherein the method further comprises decrypting the encrypted fields.

16. An image processing device comprising:
an image data input port configured to receive a plurality of interlaced fields, each of which is configured to display a frame under an analog image displaying standard; and
a image processor configured to process the interlaced fields so as to produce a digital image data configured to display an image frame under a digital image displaying standard, wherein the image processor is further configured to deinterlace the plurality of interlaced fields.

17. The device of Claim 16, wherein each of the interlaced fields is configured to represent at least part of each of a plurality of portions of the image frame.

18. The device of Claim 17, wherein the plurality of portions of the image frame have an identical shape and size.

19. The device of Claim 16, wherein the image processor is further configured to:
select one of the plurality of fields;
distribute at least one image line from the selected field to generate a plurality of portion of the image frame under the digital image displaying standard.

20. The device of Claim 19, wherein the image processor is further configured to generate the image frame to be displayed under the digital image displaying standard using the portions.

21. The device of Claim 16, wherein each of the plurality of interlaced fields comprises an encrypted field, wherein the device further comprises a decryptor configured to decrypt the encrypted fields.

22. The device of Claim 16, wherein the analog image displaying standard is one selected from the group consisting of NTSC, PAL, and SECAM standards.
